# EUROPEAN PATENT SPECIFICATION

(11) **EP 1 151 232 B1**
(45) Date of publication and mention of the grant of the patent: **14.12.2005**
(21) Application number: 00902191.6
(22) Date of filing: 13.01.2000
(51) Int. Cl.: F25D 21/14, B67D 3/00, A47G 23/04, B65D 23/06, C02F 1/64

(54) **APPARATUS FOR TREATING GROUNDWATER**
VORRICHTUNG ZUR BEHANDLUNG VON GRUNDWASSER
DISPOSITIF SERVANT A TRAITER DE L'EAU PROVENANT DU SOL

(30) Priority: 14.01.1999 NL 1011021
(43) Date of publication of application: 07.11.2001
(73) Proprietor: Remon B.V., 9363 TH Marum (NL)
(72) Inventor: VAN DER VELDE, Ytsen, NL-9865 AN Opende (NL)
(74) Representative: Prins, Adrianus Willem
(86) International application number: PCT/NL2000/000017
(87) International publication number: WO 2000/042369

(56) References cited:
- EP-A- 0 774 632
- EP-A- 0 774 633
- EP-A- 0 812 783
- EP-A- 0 836 057
- US-A- 5 273 182
- US-A- 5 762 889
- US-A- 5 776 333
- PATENT ABSTRACTS OF JAPAN vol. 097, no. 005, 30 May 1997 (1997-05-30) & JP 09 027069 A (SANYO ELECTRIC CO LTD), 28 January 1997 (1997-01-28)

## Description

The invention relates to an apparatus for treating groundwater which comprises a vessel defining a space and a liquid transport system communicating with the space, the vessel being provided with means for treating groundwater contained in the vessel.

Such apparatuses for treating groundwater is known from EP-A-0878225. An apparatus comprising the features of the preamble of claim 1 is disclosed by document US-A-5 776 333.

In such liquid treatment apparatuses and also other liquid treatment apparatuses the problem arises that at high ambient temperatures and an associated air humidity condensed water drips from the vessel and from the liquid transport system and spreads over the floor.

It is an object of the invention to efficiently make a provision for, on the one hand, inhibiting the formation of condensed water and, on the other hand, reliably collecting condensed water dripping down.

This object is achieved according to the present invention by providing an apparatus for treating groundwater according to the features of claim 1.

By providing an envelope of the vessel having a bottom extending below the vessel, the formation of condensed water is inhibited, and it is reliably ensured that potentially precipitated condensed water is collected. Since the bottom has a part with a raised edge, which part projects from the vessel to below the liquid transport system, it is also ensured that condensed water running or dripping down from the liquid transport system is reliably collected and that no condensed water can fall between the vessel and the provision for collecting condensed water dripping down from the liquid transport system. Moreover, since the provision for collecting condensed water running or dripping down from the liquid transport system is formed by a projecting part of the bottom, no separate part for collecting condensed water running or dripping down from the liquid transport system is required and all the condensed water run or dripped down is collected in a common container, from which it can be removed, if necessary, in one operation via a draining device.

Particularly advantageous structural aspects of the invention are described in the dependent claims.

Further objects, elaborations, effects and details of the invention will be apparent from the following description of a practical example, in which reference is made to the drawing. In the drawing:

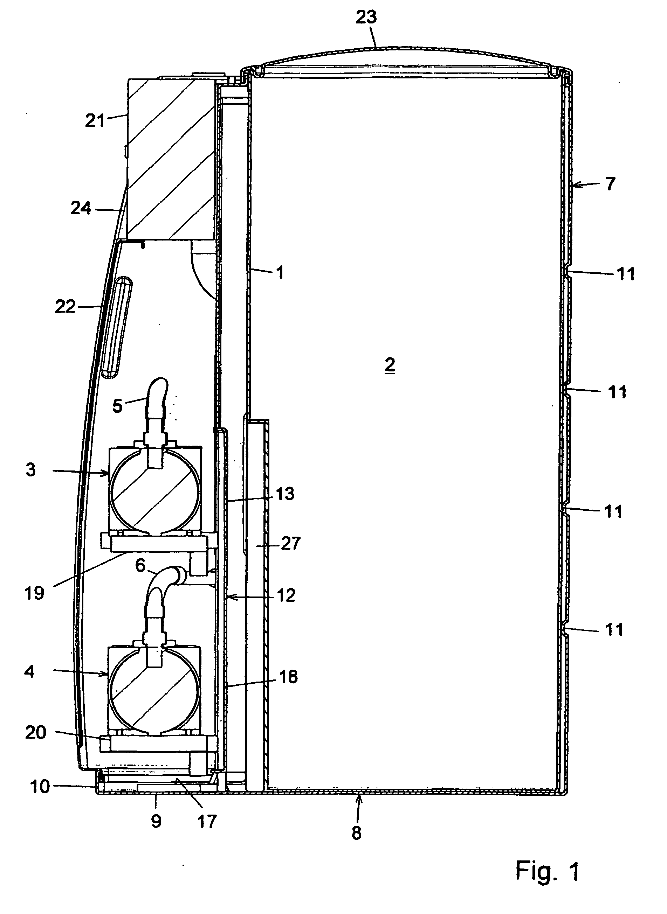

Fig. 1 is a cross sectional view of a liquid treatment apparatus according to the invention, and
Fig. 2 is an isometrically projected view of parts of the liquid treatment apparatus of Fig. 1, without a housing cover.

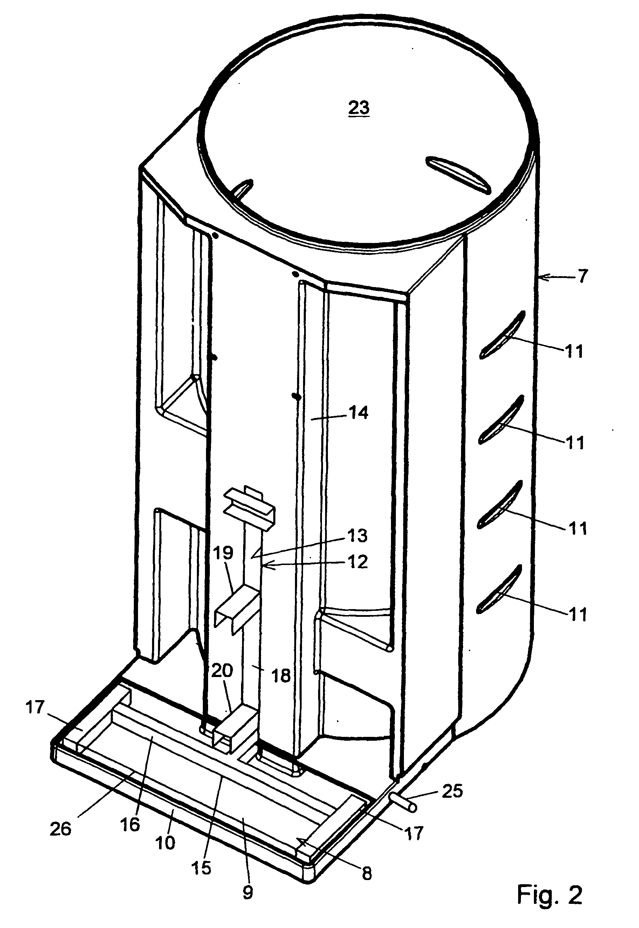

The liquid treatment apparatus according to the practical example shown is a water deferrizing apparatus which comprises a filter vessel 1 defining a space 2 in which a filter (not shown) can be placed. For further details concerning the design of the filter.and the provisions for moving water in such a water deferrizing apparatus, reference is made to applicants' Dutch patent 1005789. The filter may, for instance, be formed by filter material to be poured into the space 2 in bulk or by one or more layers of solid filter material. The filter material for the filter may be selected to filter out specific substances. To move water, the apparatus is provided with two pumping units 3, 4 with pipes 5, 6 connected thereto, which form part of a liquid transport system communicating with the space 2. In Fig. 2, however, the liquid transport system 3-6 is left out, so as to increase the visibility of some other parts of the apparatus.

The water deferrizing apparatus is further provided with an envelope 7 which envelops the vessel 1 and has a bottom 8 extending below the vessel 1. The bottom 8 has a part 9 with a raised edge 10, which part 9 projects from the vessel 1 to below the liquid transport system 3-6. The raised edge 10 is provided with a draining device 25, via which liquid collected on the projecting part 9 can be discharged.

The envelope 7 simultaneously inhibits the formation of condensed water and, through the part 9 of the bottom 8 thereof projecting from the vessel 1 to below the liquid transport system 3-6, collects both condensed water precipitated on the vessel and condensed water precipitated against the pumps 3, 4 and the tubes 5, 6. In this practical example there is no transition area between the provisions for collecting condensed water from the liquid transport system 3-6 and provisions for collecting condensed water precipitated against the vessel 1, so that it is ensured that all the condensed water is collected. The invention, however, is not limited thereto; the invention can also be used if there is a transition area between the provisions for collecting condensed water from the liquid transport system 3-6 and provisions for collecting condensed water precipitated against the vessel 1. This transition area may, for instance, consist of one or more strengthening ribs or, for instance, a joint if the bottom 8 and the projecting part 9 are composed of several parts. Although it is preferred according to the invention that the provisions for collecting condensed water from the liquid transport system 3-6 and provisions for collecting condensed water precipitated against the vessel 1 are interconnected, so that all the collected liquid can be discharged via the draining device 25, the invention can also be used if both collecting provisions cannot exchange liquid with each other. In the latter case the invention provides separate draining devices for the respective collecting provisions.

To ensure that all the condensed water dripping down from the liquid transport system 3-6 is actually collected, it is ensured in the proposed apparatus that all the downwardly projecting end parts of the liquid transport system, from where drops can fall down, are located, viewed from above, within a contour defined by the raised edge 10.

Since, moreover, the projecting part 9 is a part of the bottom 8 formed integrally therewith, a simple construction is obtained, and it is very reliably ensured that the bottom is free from leakage. For the same purpose, it is also advantageous that the bottom 8 is a part of the envelope 7 formed integrally therewith.

When the vessel 1 is filled with water, it is stabilized through the weight of the water. Since the apparatus is further provided with spacers 11 for spacing walls of the envelope 7 and the vessel 1 and the envelope 7 is supported by the vessel 1 at the spacers 11, the vessel 1, in its filled operative condition, also imparts stability to the envelope 7 and can be of correspondingly light construction. Thus, the vessel 1 filled in the operative condition also forms a supporting body which holds the envelope 7 in place and shape.

In the apparatus shown in the drawings, the spacers 11 are obtained in a very simple manner and at very low cost, because they are designed as depressions of the envelope 7. On the other hand, according to the invention other suitable spacers may also be used, such as, for instance, separately arranged spacers. Between the spacers 11 the wall of the envelope 7 is preferably slightly pre-stressed, so that it is held tight in shape.

The apparatus is further provided with a supporting frame 12 which supports parts of the liquid transport system 3-6. The supporting frame 12 is anchored relative to the envelope 7 against falling over, so that a very simple construction is sufficient. Here, too, advantage is indirectly taken of the weight and the stability of the vessel 1 filled with water to keep the supporting frame 12 upright.

The anchorage of the supporting frame 12 relative to the envelope is obtained in a very simply manner, because a section 13 of the envelope 7 and a part of the supporting frame 12 interlock with each other. Besides, in this practical example the wall of the vessel 1 is shaped such that the vessel wall defines a recess 27. The supporting frame 12, in mounted condition, partly extends into the recess 27; since a part of the supporting frame 12 then contacts the vessel 1, a further support of the supporting frame 12 is obtained. On the other hand, the use of the invention is also possible without the recess 27; for instance, if the load on the supporting frame is relatively small, because lightweight pumps are used, it is possible to make the wall of the vessel 1 straight. In this case the supporting frame 12 extends into the section 13 of the envelope 7.

Since the anchorage is integrated into a strengthening section 14 of the envelope 7, it is further ensured that forces exerted by the supporting frame on the envelope 7 are evenly distributed.

The supporting frame 12 has a supporting foot 15 which is supported on the bottom 8 at least near edges 10 of the projecting part 9 of the bottom 8. Thus, the supporting frame 12, partly through the great weight of the pumps 3, 4 supported by it, holds the projecting part 9 of the bottom tight in a shape extending along the floor. To this end, it is further advantageous that the supporting frame has intermediate beams 16 and 26 and, at the ends thereof, transverse beams 17 which are supported on the projecting part 9 along the front and side edges of the projecting part 9 of the bottom 8. The intermediate beam 16 and the transverse beams 17 further protect the raised edges 10 from damage, because these beams take up the weight of a person who comes into the area of the raised edges and thus prevent the raised edges 10 from being crushed.

The upright part 18 of the supporting frame 12 extending from the foot 15 at right angles and thus vertically in placed condition, which upright part 18, relative to the envelope 7, is anchored therein, also ensures that the envelope 7, on the side of the projecting part 9 of the bottom 8, is held in a position extending at right angles from the bottom 8. Thus, on the one hand, the weight of the vessel 1 filled with water keeps the supporting frame 12 from falling over, and, on the other hand, the supporting frame 12, in cooperation with the great weight of the parts of the pumps 3, 4 supported by it, ensures that the envelope 7 and the vessel 1 are held firmly upright, the more so as the supporting frame 12 contacts the vessel 1 via the recess 27.

The supporting frame 12 is further provided with supporting arms 19, 20, which support the pumps 3, 4.

The apparatus is further provided with a switch box 21, which includes operating elements to be kept away from incompetent people. Furthermore, the apparatus has a detachable housing cover 22, which, in condition of use, shields dangerous moving parts of the pumps 3, 4. The housing cover 22 has a lower edge falling within raised edges 10 of the projecting part 9 of the bottom 8, so that water potentially running down along the housing cover is also reliably collected by the bottom 8. The housing cover 22 may be provided with ventilating means, such as, for instance, ventilation openings, for discharging heat generated within the housing by, inter alia, the pumps.

On its upper side, the apparatus is provided with a cover 23, which, in placed condition, holds in shape both the vessel 1 and the envelope 7 in the upper area thereof.

The cavity between the envelope 7 and the vessel 1 may be filled with insulating material, such as foam or granular material. This material applied may also serve to further support the envelope 7.

Since the housing cover 22 is provided with a recess 24 from which the switch box 21 projects, the switch box 21 is also properly accessible without disassembling the housing cover 22. Consequently, the housing cover 22 and the switch box 21 can be opened or removed independently of each other.

The envelope 7 and the housing cover 22 can advantageously be made of PE by rotational molding or blow molding; according to the invention, however, other suitable materials, in particular plastics, may also be used.

The specification starts from a one-piece design of the envelope 7; the invention, however, is by no means limited thereto. The envelope 7 may also be composed of several parts. According to the invention, however, the projecting part 9 is preferably formed integrally with the bottom 8, and the bottom 8 is preferably formed integrally with the lower part of the envelope 7.

It will be clear to a person skilled in the art that within the scope of the invention many other embodiments other than the embodiment proposed by way of example are possible.

## Claims

1. An apparatus for treating groundwater, which comprises a vessel (1) defining a space (2) and a liquid transport system (3-6) communicating with the space (2), the vessel (1) being provided with means for treating groundwater contained in the vessel (1), the apparatus further comprising an envelope (7) of said vessel (1), said envelope (7) having a bottom (8) extending below the vessel (1), **characterized in that** said bottom (8) has a part (9) with a raised edge (10), and which part projects from the vessel (1) to below said liquid transport system (3-6), for collecting water condensed against said vessel (1) and water condensed against said liquid transport system (3-6).

2. An apparatus according to claim 1, wherein at least all the downwardly projecting end parts of said liquid transport system (3-6), viewed from above, are located within a contour defined by said raised edge (10), such that liquid dripping down from outer parts of said liquid transport system (3-6) always falls on said projecting part of said bottom (8).

3. An apparatus according to claim 1 or 2, wherein said projecting part (9) is a part of said bottom (8) formed integrally therewith.

4. An apparatus according to any of the preceding claims, wherein said bottom (8) is a part of said envelope (7) formed integrally therewith.

5. An apparatus according to any of the preceding claims, further comprising: spacers (11) for spacing walls of the envelope (7) and of the vessel (1), the envelope (7) being supported by the vessel (1) at the spacers (11).

6. An apparatus according to claim 5, wherein said spacers (11) are designed as depressions of said envelope (7).

7. An apparatus according to any of the preceding claims, further comprising: a supporting frame (12) anchored relative to said envelope (7) and supporting at least parts of said liquid transport system (3-6).

8. An apparatus according to claim 7, wherein said anchorage is formed by a section (13) of said envelope (7) and a part (18) of said supporting frame (12) which interlock with each other.

9. An apparatus according to claim 7 or 8, wherein said anchorage is integrated into a strengthening section (14) of said envelope (7) .

10. An apparatus according to any of claims 7-9, wherein said supporting frame (12) has a supporting foot (15) which is supported on said bottom (8) at least near edges (10) of said projecting part (9) of said bottom (8).

11. An apparatus according to claim 10, wherein said supporting frame (12) has an upright part (18) which, in placed condition, extends upwards from the supporting foot (15) and forms the part of the supporting frame (12) anchored to the envelope (7).

12. An apparatus according to any of claims 7-11, wherein the vessel (1) is shaped such that the vessel (1) defines a recess (27) for at least partly receiving said supporting frame (12).

13. An apparatus according to any of the preceding claims, further comprising a housing cover (22) with a lower edge falling within raised edges (10) of the projecting part (9) of the bottom (8).

## Patentansprüche

1. Vorrichtung zum Behandeln von Grundwasser, die ein einen Raum (2) definierendes Gefäß (1) und ein Flüssigkeitstransportsystem (3-6), das mit dem Raum (2) kommuniziert, umfasst, wobei das Gefäß (1) mit Mitteln versehen ist, um in dem Gefäß (1) enthaltenes Grundwasser zu behandeln, wobei die Vorrichtung ferner eine Hülle (7) für das Gefäß (1) umfasst, wobei die Hülle (7) einen unter dem Gefäß (1) sich erstreckenden Boden (8) besitzt, **dadurch gekennzeichnet, dass** der Boden (8) einen Teil (9) mit einem erhöhten Rand (10) besitzt, wobei dieser Teil von dem Gefäß (1) unter das Flüssigkeitstransportsystem (3-6) vorsteht, um an dem Gefäß (1) kondensiertes Wasser und an dem Flüssigkeitstransportsystem (3-6) kondensiertes Wasser zu sammeln.

2. Vorrichtung nach Anspruch 1, bei der sich zumindest alle nach unten vorstehenden Endteile des Flüssigkeitstransportsystems (3-6) bei Betrachtung von oben innerhalb eines durch die erhöhte Kante (10) definierten Umfangs befinden, so dass von äußeren Teilen des Flüssigkeitstransportsystems (3-6) herabtropfende Flüssigkeit stets auf den vorstehenden Teil des Bodens (8) fällt.

3. Vorrichtung nach Anspruch 1 oder 2, bei der der vorstehende Teil (9) ein Teil des Bodens (8) ist, der einteilig damit ausgebildet ist.

4. Vorrichtung nach einem der vorhergehenden Ansprüche, bei der der Boden (8) ein Teil der Hülle (7) ist, der einteilig damit ausgebildet ist,

5. Vorrichtung nach einem der vorhergehenden Ansprüche, die ferner umfasst: Abstandshalter (11), um einen Abstand zwischen Wänden der Hülle (7) und jenem des Gefäßes (1) zu halten, wobei die Hülle (7) durch das Gefäß (1) bei den Abstandshaltern (11) unterstützt ist.

6. Vorrichtung nach Anspruch 5, bei der die Abstandshalter (11) als Vertiefungen der Hülle (7) entworfen sind.

7. Vorrichtung nach einem der vorhergehenden Ansprüche, die ferner umfasst: einen Unterstützungsrahmen (12), der in Bezug auf die Hülle (7) verankert ist und wenigstens Teile des Flüssigkeitstransportsystems (3-6) unterstützt.

8. Vorrichtung nach Anspruch 7, bei der die Verankerung durch einen Abschnitt (13) der Hülle (7) und einen Teil (18) des Unterstützungsrahmens (12), die miteinander verriegelt sind, gebildet ist.

9. Vorrichtung nach Anspruch 7 oder 8, bei der die Verankerung in einen Verstärkungsabschnitt (14) der Hülle (7) integriert ist.

10. Vorrichtung nach einem der Ansprüche 7-9, bei der der Unterstützungsrahmen (12) einen Unterstützungsfuß (15) besitzt, der auf dem Boden (8) wenigstens in der Nähe von Rändern (10) des vorstehenden Teils (9) des Bodens (8) unterstützt ist.

11. Vorrichtung nach Anspruch 10, bei der der Unterstützungsrahmen (12) einen aufrecht stehenden Teil (18) besitzt, der sich im angeordneten Zustand von dem Unterstützungsfuß (15) nach oben erstreckt und jenen Teil des Unterstützungsrahmens (12) bildet, der an der Hülle (7) verankert ist.

12. Vorrichtung nach einem der Ansprüche 7-11, bei der das Gefäß (1) so geformt ist, dass das Gefäß (1) eine Aussparung (27) für eine wenigstens teilweise Aufnahme des Unterstützungsrahmens (12) definiert.

13. Vorrichtung nach einem der vorhergehenden Ansprüche, die ferner eine Gehäuseabdeckung (22) umfasst, wovon eine Unterkante in erhöhte Kanten (10) des vorstehenden Teils (9) des Bodens (8) fällt.

## Revendications

1. Appareil de traitement d'une nappe d'eau sousterraine qui comprend une cuve (1) définissant un espace (2) et un système de transport de liquide (3 à 6) communiquant avec l'espace (2), la cuve (1) étant munie de moyens de traitement d'une nappe d'eau sousterraine contenus dans la cuve (1), ledit l'appareil comprenant en outre une chemise (7) de ladite cuve (1), ladite chemise (7) ayant un fond (8) qui s'étend en dessous de la cuve (1), **caractérisé en ce que** ledit fond (8) a une partie (9) munie d'un bord relevé (10), laquelle partie fait saillie à partir de la cuve (1) jusqu'en dessous dudit système de transport de liquide (3 à 6), afin de collecter l'eau condensée contre ladite cuve (1) et l'eau qui est condensée contre ledit système de transport de liquide (3 à 6).

2. Appareil selon la revendication 1, dans lequel au moins toutes les parties d'extrémité qui font saillie vers le bas dudit système de transport de liquide (3 à 6), vues de dessus, sont situées à l'intérieur d'un contour défini par ledit bord relevé (10), de telle sorte que le liquide qui s'égoutte depuis les parties extérieures dudit système de transport de liquide (3 à 6) tombe toujours sur ladite partie en saillie dudit fond (8).

3. Appareil selon la revendication 1 ou 2, dans lequel ladite partie en saillie (9) fait partie dudit fond (8) en étant formée d'une seule pièce avec celui-ci.

4. Appareil selon l'une quelconque des revendications précédentes, dans lequel ledit fond (8) fait partie de ladite chemise (7) en étant formé d'une seule pièce avec celle-ci.

5. Appareil selon l'une quelconque des revendications précédentes, comprenant en outre : des entretoises (11) destinées à espacer les parois de la chemise (7) et de la cuve (1), la chemise (7) étant supportée par la cuve (1) au niveau des entretoises (11).

6. Appareil selon la revendication 5, dans lequel lesdites entretoises (11) sont conçues comme des dépressions de ladite chemise (7).

7. Appareil selon l'une quelconque des revendications précédentes, comprenant en outre : un châssis support (12) ancré par rapport à ladite chemise (7) et supportant au moins des parties dudit système de transport de liquide (3 à 6).

8. Appareil selon la revendication 7, dans lequel ledit ancrage est formé par une section (13) de ladite chemise (7) et une partie (18) dudit châssis support (12) qui s'emboîtent l'une dans l'autre.

9. Appareil selon la revendication 7 ou 8, dans lequel ledit ancrage est intégré dans une section de renfort (14) de ladite chemise (7).

10. Appareil selon l'une quelconque des revendications 7 à 9, dans lequel ledit châssis support (12) possède un piétement de support (15) qui repose sur ledit fond (8) au moins près des bords (10) de ladite partie en saillie (9) dudit fond (8).

11. Appareil selon la revendication 10, dans lequel ledit châssis support (12) a une partie verticale (18) qui, lorsqu'elle est en place, s'étend vers le haut à partir du piétement de support (15) et fait partie du châssis support (12) ancré à la chemise (7).

12. Appareil selon l'une quelconque des revendications 7 à 11, dans lequel la cuve (1) a une forme agencée pour définir un évidement (27) destiné à recevoir, au moins partiellement, ledit châssis support (12) .

13. Appareil selon l'une quelconque des revendications précédentes, comprenant en outre un capotage de boîtier (22) avec un bord inférieur qui tombe à l'intérieur des bords relevés (10) de la partie en saillie (9) du fond (8).
